# EUROPEAN PATENT SPECIFICATION

(11) **EP 4 337 922 B1**
(45) Date of publication and mention of the grant of the patent: **04.03.2026**
(21) Application number: 22723830.0
(22) Date of filing: 10.05.2022
(51) Int. Cl.: G01F 1/684, G01F 1/84, G01F 15/18, G01F 1/48

(54) **DEVICE FOR CONTROLLING OR MEASURING A FLUID AND METHOD FOR MAKING THE DEVICE**
VORRICHTUNG ZUR STEUERUNG ODER MESSUNG EINES FLUIDS UND VERFAHREN ZUR HERSTELLUNG DER VORRICHTUNG
DISPOSITIF DE COMMANDE OU DE MESURE D'UN FLUIDE ET PROCÉDÉ DE FABRICATION DU DISPOSITIF

(30) Priority: 12.05.2021 NL 2028203
(43) Date of publication of application: 20.03.2024
(73) Proprietor: Berkin B.V., 7261 AK Ruurlo (NL)
(72) Inventor: GROENESTEIJN, Jarno, 7261 AK RUURLO (NL); DE JONGE, Natasja, 7261 AK RUURLO (NL); KATIER, Rick John, 7261 AK RUURLO (NL); LÖTTERS, Joost Conrad, 7261 AK RUURLO (NL); RENSEN, Quinten Johannes, 7261 AK RUURLO (NL); SPARREBOOM, Wouter, 7261 AK RUURLO (NL); TIEBOUT, David Roelof Ephraïm, 7261 AK RUURLO (NL)
(74) Representative: Algemeen Octrooi- en Merkenbureau B.V.
(86) International application number: PCT/NL2022/050255
(87) International publication number: WO 2022/240288

(56) References cited:
- EP-A1- 2 554 952
- EP-A1- 3 719 453
- US-A1- 2015 177 122
- US-A1- 2019 119 103
- US-A1- 2020 386 645
- JAMES J LICARIDALE W SWANSON: "Applications", 1 January 2005 (2005-01-01), XP009512074, ISBN: 978-0-8155-1513-5, Retrieved from the Internet <URL:https://linkinghub.elsevier.com/retrieve/pii/B9780815515135500073>

## Description

### FIELD OF THE INVENTION

The present invention generally relates to a device for controlling or measuring a fluid, comprising:
- a base part;
- a microfabricated part for measuring, controlling or regulating a fluid;
- the base part and the microfabricated part being separated by an intermediate layer, having a first main surface and a second, opposite main surface, wherein the intermediate layer is attached to the base part on the first main surface via a first attachment means and attached to the microfabricated part on the second main surface via a second attachment means, wherein the first attachment means and/or the second attachment means comprise a first and/or a second pliant attachment layer, and
- an inlet flow channel, situated in the base part, extending from a flow inlet in the base part through a flow inlet in the intermediate layer to a flow inlet of the microfabricated part,
- an outlet flow channel, situated in the base part, extending from a flow outlet of the microfabricated part through a flow outlet in the intermediate layer to a flow outlet in the base part.

### BACKGROUND OF THE INVENTION

Devices for controlling or measuring fluids are widely used in industry and laboratories, and miniaturization is a general trend for these applications. Miniaturized devices must withstand a wide range of temperatures and pressures just like "macro" devices, and be leak-tight and resistant to chemical degradation. These devices generally have a base part that connects the device to the outer world, and a microfabricated part, typically comprising a sensor. However, present-day devices for controlling or measuring fluids require further improvement in packaging of the microfabricated part, especially attachment to the base part. The microfabricated part is especially sensitive to damage by pressure and temperature. Moreover, bending and stress in the sensor chip should be minimized so the performance of the sensor is not affected.

Therefore, materials used with the "macro components" and the sensor, usually a silicon microchip, must match in thermal expansion coefficient (CTE) and be pressure-resistant, which limits options for materials. Alternatively, thermal expansion and pressure can be accommodated. It is also preferable for the assembly to be compact. More preferably, electrical connections and fluidic connections are separated to prevent fluid leakages from damaging the electrical connections.

US 2015/177122 A1 discloses a MEMS-based cell sorting system configured for sorting of cells in microfabricated channels housed in a disposable cartridge. The MEMS-based cell sorting system includes a microfabricated cell sorting valve that is responsive to an applied magnetic field.

US 2019/0119103 A1 discloses a pressure sensor assembly with a sensor die and a ceramic substrate. The sensor die has a first side and a second side that is opposite to the first side. The sensor die includes a silicon chip that has a diaphragm configured to be exposed to a working fluid. The sensor die includes one or more electrical sensing elements mounted on the diaphragm, configured to measure a pressure of the working fluid.

US 2020/0386645 A1 discloses a pressure sensor assembly comprising a sensor body having a membrane within the body being arranged for placement in communication with a fluid from an external source and determining a pressure of the fluid.

EP 3 719 453 A1 furthermore discloses an apparatus for calculating a thermal conductivity of a gaseous substance. The apparatus includes a substrate; a cover member disposed on the substrate, wherein the cover member comprises a flow tunnel for the gaseous substance; a flow sensing element disposed on the substrate, wherein the flow sensing element is exposed to the gaseous substance in the flow tunnel; and a pressure sensing element disposed on the substrate, wherein the pressure sensing element is exposed to the gaseous substance in the flow tunnel.

### OBJECT OF THE INVENTION

It is therefore an object of the invention to provide a device for controlling or measuring a fluid that is able to withstand a wide range of temperatures and pressures, is leak-tight under those circumstances, resistant to chemical degradation, is compact and preferably allows electrical connections and fluidic connections to be separated.

### SUMMARY OF THE INVENTION

The invention according to claim 1 provides a device for controlling or measuring a fluid comprising: - a base part;- a microfabricated part for measuring, controlling or regulating a fluid;- the base part and the microfabricated part being separated by an intermediate layer, having a first main surface and a second, opposite main surface, wherein the intermediate layer is attached to the base part on the first main surface via a first attachment means and attached to the microfabricated part on the second main surface via a second attachment means, wherein the first attachment means and/or the second attachment means comprise a first and/or a second pliant attachment layer,- an inlet flow channel, situated in the base part, extending from a flow inlet in the base part through a flow inlet in the intermediate layer to a flow inlet of the microfabricated part;
- an outlet flow channel, situated in the base part, extending from a flow outlet of the microfabricated part through a flow outlet in the intermediate layer to a flow outlet in the base part, characterized by
- the base part and the microfabricated part being made of materials having different coefficients of thermal expansion (CTE's), and by
- the intermediate layer having a CTE between a CTE of the base part and a CTE of the microfabricated part.

Thus, the first attachment means is placed on the base part, the intermediate layer on top thereof, the second attachment means on top of the intermediate layer and the microfabricated part on top of the second attachment means. The attachment means and intermediate layer are configured to permit a medium to pass from the inlet of the base part to the inlet of the microfabricated part, and from the outlet of the microfabricated part to the outlet of the base part. Thus the intermediate layer is provided with an intermediate layer flow inlet and an intermediate layer flow outlet. This intermediate layer is preferably relatively stiff, i.e. has a stiffness approximately equal to the microfabricated part. The first and second attachment means on the main surfaces of the intermediate layer preferably are adhesive layers. Together, this assembly of intermediate layer and first and second attachment means compensates for thermal expansion and for pressure effects. Therefore, the first and second attachment means should be sufficiently flexible to absorb differences in coefficient of thermal expansion (CTE), and strong enough to withstand high pressure and pressure shocks. The first and second attachment means should also be sufficiently leak-proof, as well as minimize diffusion of gasses such as hydrogen or limit absorption of liquids such as water. The first and second attachment means are chosen to match the material of the microfabricated part, such as a sensor chip, and the base part. The attachment means are preferably made of a different material than the intermediate layer. The material of the attachment layers should be chemically resistant.

The above solution makes it possible to achieve significantly higher medium pressures than known miniaturized devices as well as permitting exposure to higher temperatures. In addition, it can improve the accuracy, reproducibility and/or stability of a microfabricated part comprising a sensor. The inventors have successfully tested the abovementioned device in a set-up comprising a thermal flow sensor chip with medium pressures up to 20 bar, and at ambient temperatures of -15 to 105° Celsius, with the device as a whole having been exposed to temperatures of 120° Celsius without any problems. The inventors do not know of any other flow meter comprising a microfabricated thermal flow sensor able to tolerate such a wide range of pressure and temperature.

Pressure shocks are absorbed by the attachment means and intermediate layer in a way that reduces risks to the operation of the device, in particular the microfabricated part. As a further benefit of the intermediate layer, electrical connections and electrical components can be applied to this layer, eliminating the need to attach an additional printed circuit board (PCB).

Another advantage of the presence of the intermediate layer is that the electrical connections and fluidic connections can be separated, i.e. gas/liquid connections at a base-part-facing surface of the microfabricated part and the electrical connections at a surface of said part not facing the base part.

The publication "PRECISE DOSAGE SYSTEM FOR CONTROLLED LIQUID DELIVERY BASED ON FAST MEMS BASED FLOW SENSOR", by M. Goetz, S. Messner, M. Ashauer and R. Zengerle, in "Transducers 2009", Denver, CO, USA, June 21-25, 2009 discloses a controller for controlling a fuel supply valve regulating fuel supply to a mixing system in predefined quantities. This publication utilizes different means for realizing leak-tight attachments, in particular O-rings.

EP 3139159 A1 discloses a microfluidic chip having an arrangement that promotes mechanical protection of the chip by use of a.o. a glop top, and locates the sensor on a chamber.

The first attachment means and/or the second attachment means comprise a first and/or a second pliant attachment layer. In this respect, "pliant" means elastically deformable, i.e. essentially "unbreakable" when fixed in the device. The first and second pliant attachment layers absorb differences in coefficients of expansion (CTE) between the base part, the intermediate layer and the microfabricated part. In cured form, the yield strength is preferably well above any strain due to CTE differences. The glass transition temperature Tg should be outside the operational temperature range of the device, and the adhesive force must be high enough to absorb stresses caused by CTE differences and pressure shocks. If the material of the pliant layer is a glue that is applied in liquid form, then thixotropy and viscosity must be high enough so that the glue remains in place after application and the glue does not enter the inlet and outlet flow channels, even during curing. The thickness of the first and second pliant layers of adhesive material is precisely defined, and depends on the expected operational pressure and temperature. The first and second pliant attachment layers should be naturally suitable for "leak-proof" applications and they must be attached so that dead space around the inlet and outlet flow channels is minimized to decrease dead volume and to reduce accumulation of undesirable material/contaminants in nooks. Furthermore, the first and second pliant attachment layers should preferably be corrosion-resistant and have high chemical resistance.

Another embodiment thus relates to an aforementioned device, wherein the first and/or the second pliant attachment layer are configured for absorbing differences in CTE, mechanical stress or a shock wave between the parts.

A further embodiment relates to an aforementioned device, wherein the first and/or second pliant attachment layer comprises an adhesive, a paste, a foil, a gum, a gel and/or an attachment layer glue.

An embodiment relates to an aforementioned device, wherein the first and/or second pliant attachment layer comprises multiple sub-layers, to allow further tuning of the properties of the first and/or second pliant attachment layer.

An embodiment relates to an aforementioned device, wherein the first pliant attachment layer and/or the second pliant attachment layer comprise a thermosetting polymer. For most applications thermosetting polymers are preferred over thermoplastic polymers.

An embodiment relates to an aforementioned device, wherein the thermosetting polymer comprises a resin, such as an epoxy.

According to the invention, the base part and the microfabricated part are made of materials having different CTE's.

An embodiment relates to an aforementioned device, wherein the first and/or the second pliant attachment layer are configured for absorbing differences in CTE, mechanical stress or a shock wave between, respectively, the base part and the intermediate layer, and the intermediate layer and the microfabricated part.

An embodiment relates to an aforementioned device, wherein the first pliant attachment layer and the second pliant attachment layer have a defined thickness, configured for properly absorbing CTE differences. The skilled person will know that this defined thickness depends on the operational pressures and temperatures the layers are exposed to during operation and e.g. materials used for all parts of the device. The thickness is preferably the same on all parts of such a pliant layer.

An embodiment relates to an aforementioned device, wherein the adhesive, paste or glue comprises spherical particles having a predefined diameter, such as borosilicate particles. Such spherical particles advantageously allow for double-checking the defined thickness.

An embodiment relates to an aforementioned device, wherein the first pliant attachment layer and the second pliant attachment layer are made of the same material or the same combination of materials. This permits greater ease of manufacture.

An embodiment relates to an aforementioned device, wherein the second main surface of the intermediate layer is attached to a first main surface of the microfabricated part, and the microfabricated part has a second, opposite main surface, wherein the first main surface of the microfabricated part is provided with fluid connections and is free from electrical connections, whereas the second main surface of the microfabricated part is provided with electrical connections and is free from fluid connections. Thus, the fluid connections are separated from the electrical connections, greatly improving the operational reliability of the microfabricated part.

An embodiment relates to an aforementioned device, wherein the intermediate layer comprises or consists of a ceramic, titanium, molybdenum or an alloy of nickel and cobalt, such as Kovar, allowing a tight mechanical joint between two materials over a wide range of temperatures. Use of a ceramic advantageously allows electrical connections and components to be arranged on the intermediate layer itself. Thus, a separate PCB may not be necessary to house the electrical connections.

An embodiment relates to an aforementioned device, wherein the ceramic comprises or consists of aluminium oxide, aluminium nitride, a low temperature co-fired ceramic (LTCC) or glass.

An embodiment relates to an aforementioned device, wherein the intermediate layer comprises or is a printed circuit board (PCB). Thus, as mentioned before, it may no longer be necessary to employ a separate PCB for housing the electrical connections.

An embodiment relates to an aforementioned device, wherein the intermediate layer comprises a bypass from the inlet to the outlet, and the bypass optionally comprises a laminar flow element (LFE), which can be used to replace an LFE in the base part.

According to the invention, the intermediate layer has a coefficient of thermal expansion (CTE) between a CTE of the base part and a CTE of the microfabricated part.

An embodiment relates to an aforementioned device, wherein the second attachment means faces a second intermediate layer attached to the microfabricated part on the other main surface via a third attachment means, allowing for stacking attachment layers in order to obtain the desired operational properties of the device. The skilled person could further add a third, fourth etc. intermediate layer.

An embodiment relates to an aforementioned device, wherein the microfabricated part is a microelectromechanical system (MEMS) chip.

An embodiment relates to an aforementioned device, wherein the MEMS chip is a silicon chip, a plastic chip or a ceramic chip.

An embodiment relates to an aforementioned device, wherein the MEMS chip comprises at least one of a sensor, a pump or valve.

An embodiment relates to an aforementioned device, wherein the MEMS chip sensor comprises at least one of, such as at least two of, a flow sensor, a pressure sensor, a viscosity measurement device, a humidity sensor, a CO2 sensor, a temperature sensor, a dielectric or permittivity sensor, a gas composition sensor or a multiparameter sensor.

An embodiment relates to an aforementioned device, wherein the flow sensor is a thermal flow sensor, a deltaP sensor or a Coriolis flow sensor.

An embodiment relates to an aforementioned device, wherein an additional sensor is mounted on the base part or the intermediate layer, such as pressure sensor, a temperature sensor or humidity sensor, e.g. a pressure sensor anodically mounted on e.g. glass, which is then mounted on the base part.

An embodiment relates to an aforementioned device, wherein a surface roughness of the first main surface and/or the second main surface of the intermediate layer, and/or the surface of the base part facing the intermediate layer and/or the surface of the microfabricated part facing the intermediate layer is lower than about 10% of a thickness of the intermediate layer for allowing proper bonding and for achieving the desired thermal and mechanical properties.

An embodiment relates to an aforementioned device, wherein the first main surface and/or the second main surface of the intermediate layer and/or the surface of the base part facing the intermediate layer and/or the surface of the microfabricated part facing the intermediate layer is provided with one or more protrusions for defining the thickness of the first and/or second pliant attachment layer. Similar to using spherical particles, this advantageously allows for verifying the thickness of the first and/or second pliant attachment layer.

According to the invention, the base part and the microfabricated part are made of materials having different CTE's.

An embodiment relates to an aforementioned device, wherein a main surface of the microfabricated part not facing the intermediate layer is provided with a cover for protecting the main surface of the microfabricated part not facing the intermediate layer. This cover for protecting the main surface is preferably made of silicon or glass.

An embodiment relates to an aforementioned device, wherein the CTE of the intermediate layer is about an average of the CTE of the base part and the CTE of the microfabricated part.

An embodiment relates to an aforementioned device, wherein, when the intermediate layer comprises or is a printed circuit board (PCB), electrical connections are made between the microfabricated part and the PCB by means of bondwires.

An embodiment relates to an aforementioned device, wherein a space surrounding the microfabricated part and any electrical connections is filled with epoxy, such that the electrical connections are protected.

An embodiment relates to an aforementioned device, wherein a main surface of the base part turned towards the intermediate layer comprises a flow inlet and/or a flow outlet and a flow inlet groove and/or flow outlet groove fluidly connecting the flow inlet and/or flow outlet with the inlet flow channel and/or outlet flow channel, wherein the flow inlet groove and/or flow outlet groove are delimited by the first main surface of the intermediate layer, the first main surface of the intermediate layer and the flow inlet groove and/or flow outlet groove thus forming an groove inlet and/or outlet flow channel, respectively. Depending on the desired application, internal volume can thus be minimized (in case of fluids) or pressure drops can thus be minimized (in case of gases).

An embodiment relates to an aforementioned device, wherein a surface roughness of the first main surface and/or the second main surface of the carrier layer, and/or the surface of the base part facing the intermediate layer and/or the surface of the microfabricated part facing the intermediate layer is lower than 0.02 mm, to allow for proper bonding of the different device parts.

An embodiment relates to an aforementioned device, wherein a yield strength of the first and/or second pliant attachment layer is higher than strain caused by CTE differences.

An embodiment relates to an aforementioned device, wherein a glass transition temperature Tg of the first and second pliant attachment layer lies outside of a temperature range to which the device is exposed during use to prevent unwanted changes in material properties of a pliant attachment layer during operation. Preferably, Tg is significantly outside said temperature range.

An embodiment relates to an aforementioned device, wherein the device is pressure-tolerant up to 20 bar.

An embodiment relates to an aforementioned device, wherein the device is able to operate at ambient temperatures of -15 to 105° degrees Celsius.

An embodiment relates to an aforementioned device, wherein the device is able to tolerate an ambient temperature of 120° Celsius.

An embodiment relates to an aforementioned device, wherein the fluid flows through the microfabricated part.

Another aspect of the invention according to claim 15 concerns a method for making an aforementioned device, comprising the steps of:
A1. attaching the second attachment means to the first main surface of the microfabricated part or the second main surface of the intermediate layer;
A2. attaching the combined second attachment means and microfabricated part to the second main surface of the intermediate layer or the combined second attachment means and intermediate layer to the microfabricated part;
B1. attaching the first attachment means to the first main surface of the intermediate layer or the surface of the base part;
B2. attaching the combined first attachment means and base part to the first main surface of the intermediate layer or the combined first attachment means and intermediate layer to the base part.

An embodiment relates to an aforementioned method, wherein steps A1, A2, B1 and B2 are carried out in that order. An alternative embodiment relates to an aforementioned method, wherein steps A1 and A2 are carried out after steps B1 and B2.

An embodiment relates to an aforementioned method, further comprising the following steps, when the glue comprises spherical particles having a predefined diameter, and when the intermediate layer comprises or is a printed circuit board (PCB):
i. applying the glue to the part of the second main surface of the intermediate layer that is to receive the PCB;
ii. inserting the spherical particles in the glue;
iii. arranging the PCB on the glue and pressing the PCB against the intermediate layer with a predefined force; and
iv. curing the glue by heating.

An embodiment relates to an aforementioned method, further comprising the following steps, when the glue comprises spherical particles having a predefined diameter:
v. applying the glue that is to form the second pliant layer to the second main surface of the intermediate layer; and
vi. inserting the spherical particles in the glue; and
vii. arranging the microfabricated part on the glue and pressing the microfabricated part against the intermediate layer with a predefined force; and
viii. curing the glue by heating.

An embodiment relates to an aforementioned method, comprising the following steps, when the glue comprises spherical particles having a predefined diameter and when the intermediate layer comprises or is a printed circuit board (PCB):
ix. arranging the glue that will form the first pliant layer on the base part;
x. inserting the spherical particles in the glue;
xi. arranging the intermediate layer, the microfabricated part and the PCB on the glue and pressing the intermediate layer, the microfabricated part and the PCB against the base part with a predefined force; and
xii. curing the glue by heating.

An embodiment relates to an aforementioned method, wherein a thixotropy and/or viscosity of the glue is sufficient to prevent the glue from flowing into the inlet flow channel and/or outlet flow channel.

Preferably, when the first and/or second pliant attachment layer comprises a glue, the glue is applied as a series of elongated glue lines, in such a way, that the inlet flow channel and the outlet flow channel are enclosed leaktight to minimize dead space around the inlet flow channel and the outlet flow channel after the glue has cured without the glue entering either flow channel.

### BRIEF DESCRIPTION OF THE DRAWINGS

The invention will be explained by means of the exemplary embodiments depicted in the accompanying drawings and the detailed description of the Figures below.
Figure 1 shows an exploded view of a device for controlling or measuring a fluid according to a first exemplary embodiment (with two options for bypasses shown which are preferably not used concurrently); and
Figure 2 shows an exploded view of a device for controlling or measuring a fluid according to a second exemplary embodiment, wherein a second intermediate layer and third attachment means are shown

### DETAILED DESCRIPTION

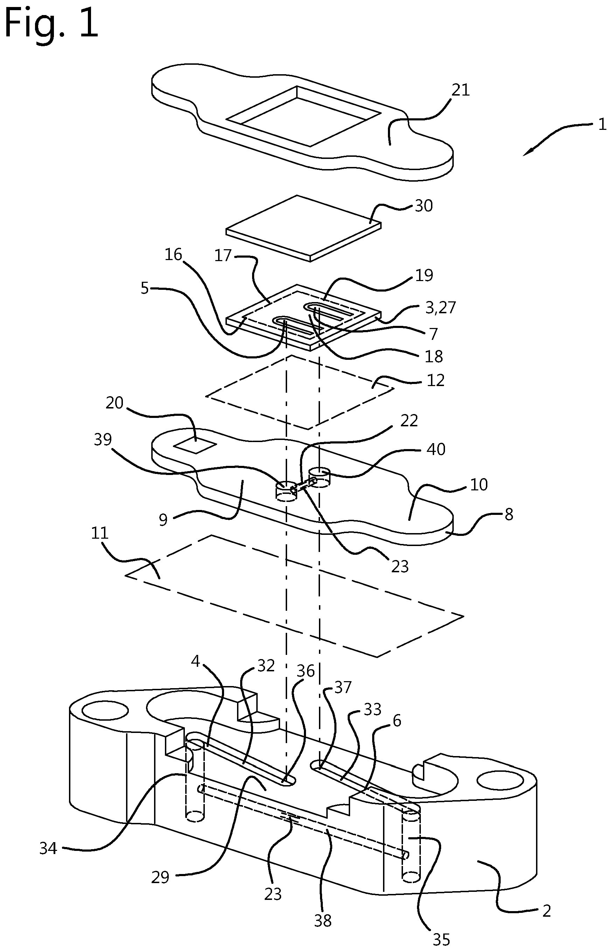

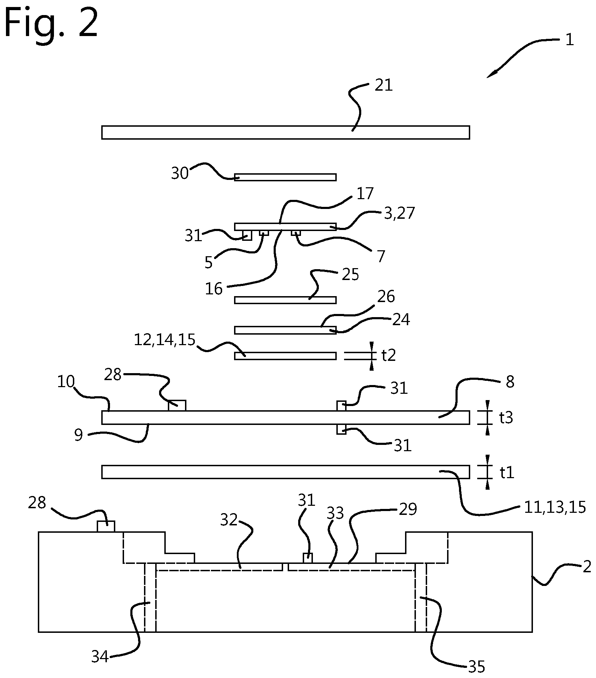

As will be shown with respect to Figures 1 and 2 (which will be discussed in conjunction), and as discussed in the foregoing, the Applicant has created a device 1 for controlling or measuring a fluid, such as a liquid or a gas, comprising a base part 2 and a microfabricated part 3 for measuring, controlling or regulating a fluid. The microfabricated part 3 could be a microelectromechanical system (MEMS) chip 27. The MEMS chip 27 could be a silicon chip, a plastic chip or a ceramic chip. The MEMS chip 27 may comprise at least one of a sensor, a pump or valve. The MEMS chip 27, when comprising a sensor, may comprise at least one of a flow sensor, a pressure sensor, a viscosity measurement device, a humidity sensor, a CO2 sensor, a temperature sensor, a dielectric or permittivity sensor or a multiparameter sensor. The flow sensor could be a thermal flow sensor, a deltaP sensor or a Coriolis flow sensor. The base part 2 and the microfabricated part 3 are made of materials having different CTE's. The base part 2 could be made of glass, steel, plastic, et cetera.

An inlet flow channel 4 is provided, extending from the base part 2 to a flow inlet 5 of the microfabricated part 3. The medium thus passes through intermediate layer flow inlet 39. An outlet flow channel 6 is also provided, extending from a flow outlet 7 of the microfabricated part 3 to the base part 2. The medium thus passes through intermediate layer flow outlet 40. The base part 2 and the microfabricated part 3 are separated by an intermediate layer 8, having a first main surface 9 and a second, opposite main surface 10. The intermediate layer 8 is attached to the base part 2 on the first main surface 9 via a first attachment means 11 and attached to the microfabricated part 3 on the second main surface 10 via a second attachment means 12. The first attachment means 11 and/or the second attachment means 12 comprise a first 13 and/or a second 14 pliant attachment layer. The first 13 and/or the second 14 pliant attachment layer are preferably configured for absorbing differences in coefficients of thermal expansion (CTE), mechanical stress or a shock wave between the parts 2, 3, 8. The first 13 and/or second 14 pliant attachment layer may comprise an adhesive, a paste, a foil, a gum, a gel and/or an attachment layer glue 15. The first 13 and/or second 14 pliant attachment layer may furthermore comprise multiple sub-layers (not shown). Preferably, the first 13 pliant attachment layer and/or the second 14 pliant attachment layer comprise a thermosetting polymer, for instance a resin, preferably an epoxy. The first 13 pliant attachment layer and the second 14 pliant attachment layer have a defined thickness t1, t2, respectively. To verify the thickness t1, t2, the adhesive, paste or an attachment layer glue 15 may comprises spherical particles having a predefined diameter, such as borosilicate particles. The first 13 pliant attachment layer and the second 14 pliant attachment layer may be made of the same material. Preferably, the materials chosen for the first 13 pliant attachment layer and the second 14 pliant attachment layer are adapted or adjusted to the material of the microfabricated part 3.

Preferably, the second main surface 10 of the intermediate layer 8 is attached to a first main surface 16 of the microfabricated part 3. The microfabricated part 3 has a second, opposite main surface 17. The first main surface 16 of the microfabricated part 3 is preferably provided with fluid connections 18 and is preferably free from electrical connections 19. The second main surface 17 of the microfabricated part 3 is preferably provided with electrical connections 19 and is preferably free from fluid connections 18.

The intermediate layer 8 preferably comprises a ceramic, titanium, molybdenum or an alloy of nickel and cobalt. The ceramic may comprise aluminium oxide, aluminium nitride, a low temperature co-fired ceramic (LTCC) or glass. The intermediate layer 8 may also comprise anisotropic materials or metamaterials. The intermediate layer 8 has a coefficient of thermal expansion (CTE) between a CTE of the base part 2 and a CTE of the microfabricated part 3. The intermediate layer 8 is preferably relatively stiff/rigid, having a relatively high bending stiffness, to prevent deformation thereof. The intermediate layer 8 may e.g. have a stiffness of more than 100 GPa.

The intermediate layer 8 may comprise a separate printed circuit board (PCB) 21 or could itself form a PCB 20. In the latter case, the electrical connections 19 could be directly arranged on the intermediate layer 8, in particular a ceramic intermediate layer 8, such that no separate PCB 21 is needed.

The intermediate layer 8 is provided with an intermediate layer flow inlet 39 and an intermediate layer flow outlet 40, and may comprise an intermediate layer bypass 22 for transporting fluid from intermediate layer flow inlet 39 to intermediate layer flow outlet 40, thus forming a flowpath parallel to microfabricated part 3. The intermediate layer bypass 22 may comprise a laminar flow element 23.

Alternatively a base part 2 may comprise a base part bypass 38 for transporting fluid from a flow inlet in base part 34 to a flow outlet in base part 35. The base part bypass 38 may comprise a laminar flow element 23.

As shown in Figure 2, the second attachment means 12 may face a second intermediate layer 24 attached to the microfabricated part 3 on the other main surface 26 via a third attachment means 25.

One or more additional sensors 28, such as a pressure sensor, temperature sensor or humidity sensor, could be mounted on the base part 2 or the intermediate layer 8. Both options are shown in Figure 2.

Preferably, a surface roughness of the first main surface 9 and/or the second main surface 10 of the intermediate layer 8, and/or the surface 29 of the base part 2 facing the intermediate layer 8 and/or the surface 16 of the microfabricated part 3 facing the intermediate layer 8 is lower than about 10% of a thickness t3 of the intermediate layer 8.

The first main surface 9 and/or the second main surface 10 of the intermediate layer 8 and/or the surface 29 of the base part 2 facing the intermediate layer 8 and/or the surface 16 of the microfabricated part 3 facing the intermediate layer 8 could be provided with one or more protrusions 31, which may be spikes or one or more ridges or a combination of both, for defining the thickness t1, t2 of the first 13 and/or second 14 pliant attachment layer.

Furthermore, a main surface 17 of the microfabricated part 3 not facing the intermediate layer 8 may be provided with a cover 30 which can protect said surface 17 of the microfabricated part 3 not facing the intermediate layer 8, or to control the environment of the sensor, optionally to create a vacuum.

A main surface 29 of the base part 2 turned towards the intermediate layer 8 may comprise a flow inlet 34 and/or a flow outlet 35 and a flow inlet groove 32 and/or flow outlet groove 33 fluidly connecting the flow inlet 34 and/or flow outlet 35 with the inlet flow channel 4 and/or outlet flow channel 6. The flow inlet groove 32 and/or flow outlet groove 33 are delimited by the first main surface 9 of the intermediate layer 8, the first main surface 9 of the intermediate layer 8 and the flow inlet groove 32 and/or flow outlet groove 33 thus forming an groove inlet 36 and/or a groove outlet flow channel 37, respectively. Depending on the desired application, internal volume can thus be minimized (in case of fluids) or pressure drops can thus be minimized (in case of gases).

Another aspect of the invention relates to a method for making an aforementioned device 1, comprising the steps of:
A1. attaching the second attachment means 12 to the first main surface 16 of the microfabricated part 3 or the second main surface 10 of the intermediate layer 8;
A2. attaching the combined second attachment means 12 and microfabricated part 3 to the second main surface 10 of the intermediate layer 8 or the combined second attachment means 12 and intermediate layer 8 to the microfabricated part 3;
B1. attaching the first attachment means 11 to the first main surface 9 of the intermediate layer 8 or the surface 29 of the base part 3;
B2. attaching the combined first attachment means 11 and base part 2 to the first main surface 9 of the intermediate layer 8 or the combined first attachment means 11 and intermediate layer 8 to the base part 2.

Steps A1, A2, B1 and B2 may be carried out in that order. Steps A1 and A2 may also be carried out after steps B1 and B2.

Preferably, the method comprises the following steps:
i. applying the attachment layer glue 15 to the second main surface 10 of the intermediate layer 8;
ii. inserting the spherical particles in the attachment layer glue 15;
iii. arranging the PCB 21 on the attachment layer glue 15 and pressing the PCB 21 against the intermediate layer 8 with a predefined force; and
iv. curing the attachment layer glue 15 on a hotplate or oven.

More preferably, the method further comprises the following steps:
v. applying the attachment layer glue 15 to the second main surface 10 of the intermediate layer 8; and
vi. inserting the spherical particles in the attachment layer glue 15; and
vii. arranging the microfabricated part 3 on the attachment layer glue 15 and pressing the microfabricated part 3 against the intermediate layer 8 with a predefined force; and
viii. curing the attachment layer glue 15 in an oven.

Even more preferably, the method comprises the following steps:
ix. arranging the attachment layer glue 15 on the base part 2;
x. inserting the spherical particles in the attachment layer glue 15;
xi. arranging the intermediate layer 8, the microfabricated part 3 and the PCB 21 on the attachment layer glue 15 and pressing the intermediate layer 8, the microfabricated part 3 and the PCB 21 against the base part 2 with a predefined force; and
xii. curing the attachment layer glue 15 in an oven.
xiii. optionally make a wirebond connection between the microfabricated part 3 and the PCB 21.

A thixotropy and/or viscosity of the attachment layer glue 15 are preferably so chosen as to be sufficient to prevent the glue from flowing into the inlet flow channel 4 and/or outlet flow channel 6 and/or intermediate layer flow inlet 39 and/or intermediate layer flow outlet 40. The attachment layer glue 15 furthermore is preferably configured to prevent outgassing, to prevent glue particles from breaking away and to prevent dissolution of the attachment layer glue 15. When the first 13 and/or second 14 pliant attachment layer comprises an attachment layer glue 15, the glue 15 is preferably applied as a series of elongated glue portions, e.g. forming a shape similar to an "8", in such a way, that the inlet flow channel 4, the outlet flow channel 6, intermediate layer flow inlet 39 and intermediate layer flow outlet 40 are enclosed as to minimize dead space said inlets and outlets after the attachment layer glue 15 has cured.

### LIST OF REFERENCE NUMERALS

1. Device for controlling or measuring a fluid
2. Base part
3. Microfabricated part
4. Inlet flow channel
5. Flow inlet of the microfabricated part
6. Outlet flow channel
7. Flow outlet of the microfabricated part
8. Intermediate layer
9. First main surface of intermediate layer
10. Second main surface of intermediate layer
11. First attachment means
12. Second attachment means
13. First pliant attachment layer
14. Second pliant attachment layer
15. Attachment layer glue
16. First main surface of microfabricated part
17. Second main surface of microfabricated part
18. Fluid connections
19. Electrical connections
20. Printed circuit board (PCB) on intermediate layer
21. Separate PCB
22. Intermediate layer bypass
23. Laminar flow element
24. Second intermediate layer
25. Third attachment means
26. Top main surface of second intermediate layer
27. MEMS-chip
28. Additional sensor
29. Top surface of base part
30. Cover for protecting microfabricated part
31. Protrusion
32. Flow inlet groove
33. Flow outlet groove
34. Flow inlet in base part
35. Flow outlet in base part
36. Groove inlet flow channel
37. Groove outlet flow channel
38. Base part bypass
39. Intermediate layer flow inlet
40. Intermediate layer flow outlet
t1. Thickness of first pliant attachment layer
t2. Thickness of second pliant attachment layer
t3. Thickness of intermediate layer

## Claims

1. Device (1) for controlling or measuring a fluid, comprising:
- a base part (2);
- a microfabricated part (3) for measuring, controlling or regulating a fluid;
- the base part (2) and the microfabricated part (3) being separated by an intermediate layer (8), having a first main surface (9) and a second, opposite main surface (10), wherein the intermediate layer is attached to the base part on the first main surface via a first attachment means (11) and attached to the microfabricated part on the second main surface via a second attachment means (12), wherein the first attachment means (11) and/or the second attachment means (12) comprise a first (13) and/or a second (14) pliant attachment layer,
- an inlet flow channel (4), situated in the base part (2), extending from a flow inlet (34) in the base part through a flow inlet (39) in the intermediate layer (8) to a flow inlet (5) of the microfabricated part;
- an outlet flow channel (6), situated in the base part (2), extending from a flow outlet (7) of the microfabricated part through a flow outlet (40) in the intermediate layer (8) to a flow outlet (35) in the base part, **characterized by**
- the base part (2) and the microfabricated part (3) being made of materials having different coefficients of thermal expansion (CTE's), and by
- the intermediate layer (8) having a CTE between a CTE of the base part (2) and a CTE of the microfabricated part (3).

2. Device (1) according to claim 1, wherein the first (13) and/or second (14) pliant attachment layer comprises an adhesive, a paste, a foil, a gum, a gel and/or an attachment layer glue (15).

3. Device (1) according to claim 1 or 2, wherein the first (13) pliant attachment layer and/or the second (14) pliant attachment layer comprise a thermosetting polymer, preferably comprising a resin, such as an epoxy.

4. Device (1) according to any one of the preceding claims, wherein the second main surface (10) of the intermediate layer (8) is attached to a first main surface (16) of the microfabricated part (3), and the microfabricated part has a second, opposite main surface (17), wherein the first main surface of the microfabricated part is provided with fluid connections (18) and is free from electrical connections (19), whereas the second main surface of the microfabricated part is provided with electrical connections (19) and is free from fluid connections (18).

5. Device (1) according to any one of the preceding claims, wherein the intermediate layer (8) comprises a ceramic, titanium, molybdenum or an alloy of nickel and cobalt, wherein the ceramic preferably comprises aluminium oxide, aluminium nitride, a low temperature co-fired ceramic (LTCC) or glass.

6. Device (1) according to any one of the preceding claims, wherein the intermediate layer (8) comprises (21) or is a printed circuit board (PCB) (20).

7. Device (1) according to any one of the preceding claims, wherein the microfabricated part (3) is a microelectromechanical system (MEMS) chip (27).

8. Device (1) according to claim 7, wherein the MEMS chip (27) comprises at least one of a sensor, a pump or a valve.

9. Device (1) according to claim 8, wherein the MEMS chip (27) sensor comprises at least one of, such as at least two of, a flow sensor, a pressure sensor, a viscosity measurement device, a humidity sensor, a CO2 sensor, a temperature sensor, a dielectric or permittivity sensor, a gas composition sensor or a multiparameter sensor.

10. Device (1) according to claim 9, wherein the flow sensor is a thermal flow sensor, a deltaP sensor or a Coriolis flow sensor.

11. Device (1) according to any one of the preceding claims, wherein the first main surface (9) and/or the second main surface (10) of the intermediate layer (8) and/or the surface (29) of the base part (2) facing the intermediate layer and/or the surface (16) of the microfabricated part (3) facing the intermediate layer is provided with one or more protrusions (31) for defining the thickness (t1, t2) of the first (13) and/or second (14) pliant attachment layer.

12. Device (1) according to any one of the preceding claims, wherein the intermediate layer has a stiffness approximately equal to the microfabricated part.

13. Device (1) according to any one of the preceding claims, wherein the first and second pliant attachment layers have a yield strength above any strain due to CTE differences.

14. Device (1) according to any one of the preceding claims, wherein the adhesive, paste or glue comprises spherical particles having a predefined diameter, such as borosilicate particles.

15. Method for making a device (1) according to any one of the preceding claims, comprising the steps of:
A1. attaching the second attachment means (12) to the first main surface (16) of the microfabricated part (3) or the second main surface (10) of the intermediate layer (8);
A2. attaching the combined second attachment means (12) and microfabricated part (3) to the second main surface (10) of the intermediate layer (8) or the combined second attachment means (12) and intermediate layer (8) to the microfabricated part (3);
B1. attaching the first attachment means (11) to the first main surface (9) of the intermediate layer (8) or the surface (29) of the base part (3);
B2. attaching the combined first attachment means (11) and base part (2) to the first main surface (9) of the intermediate layer (8) or the combined first attachment means (11) and intermediate layer (8) to the base part (2).

16. Method according to claim 15, wherein steps A1, A2, B1 and B2 are carried out in that order.

17. Method according to claim 15, wherein steps A1 and A2 are carried out after steps B1 and B2.

18. Method according to any one of the claims 15 - 17, wherein a thixotropy and/or viscosity of the glue (15) is sufficient to prevent the glue from flowing into the inlet flow channel (4) and/or outlet flow channel (6).

## Patentansprüche

1. Vorrichtung (1) zum Steuern oder Messen eines Fluids, umfassend:
- ein Basisteil (2);
- ein mikrogefertigtes Teil (3) zum Messen, Steuern oder Regulieren eines Fluids;
- wobei das Basisteil (2) und das mikrogefertigte Teil (3) durch eine Zwischenschicht (8) getrennt sind, die eine erste Hauptfläche (9) und eine zweite, gegenüberliegende Hauptfläche (10) aufweist, wobei die Zwischenschicht an der ersten Hauptfläche über ein erstes Befestigungsmittel (11) an dem Basisteil befestigt ist und an der zweiten Hauptfläche über ein zweites Befestigungsmittel (12) an dem mikrogefertigten Teil befestigt ist, wobei das erste Befestigungsmittel (11) und/oder das zweite Befestigungsmittel (12) eine erste (13) und/oder eine zweite (14) biegsame Befestigungsschicht umfassen,
- einen Einlassströmungskanal (4), der in dem Basisteil (2) angeordnet ist und von einem Strömungseinlass (34) in dem Basisteil durch einen Strömungseinlass (39) in der Zwischenschicht (8) zu einem Strömungseinlass (5) des mikrogefertigten Teils verläuft;
- einen in dem Basisteil (2) angeordneten Austrittsströmungskanal (6), der von einem Strömungsauslass (7) des mikrogefertigten Teils durch einen Strömungsauslass (40) in der Zwischenschicht (8) zu einem Strömungsauslass (35) in dem Basisteil verläuft, **dadurch gekennzeichnet, dass**
- das Basisteil (2) und das mikrogefertigte Teil (3) aus Materialien mit unterschiedlichen Wärmeausdehnungskoeffizienten (CTE) bestehen und dass
- die Zwischenschicht (8) einen CTE zwischen einem CTE des Basisteils (2) und einem CTE des mikrogefertigten Teils (3) aufweist.

2. Vorrichtung (1) nach Anspruch 1, wobei die erste (13) und/oder zweite (14) biegsame Befestigungsschicht einen Klebstoff, eine Paste, eine Folie, einen Gummi, ein Gel und/oder einen Befestigungsschichtkleber (15) umfasst.

3. Vorrichtung (1) nach Anspruch 1 oder 2, wobei die erste (13) biegsame Befestigungsschicht und/oder die zweite (14) biegsame Befestigungsschicht ein duroplastisches Polymer umfassen, das vorzugsweise ein Harz, wie z.B. ein Epoxid, umfasst.

4. Vorrichtung (1) nach einem der vorstehenden Ansprüche, wobei die zweite Hauptfläche (10) der Zwischenschicht (8) an einer ersten Hauptfläche (16) des mikrogefertigten Teils (3) befestigt ist und das mikrogefertigte Teil eine zweite, gegenüberliegende Hauptfläche (17) aufweist, wobei die erste Hauptfläche des mikrogefertigten Teils mit Fluidverbindungen (18) versehen ist und frei von elektrischen Verbindungen (19) ist, während die zweite Hauptfläche des mikrogefertigten Teils mit elektrischen Verbindungen (19) versehen ist und frei von Fluidverbindungen (18) ist.

5. Vorrichtung (1) nach einem der vorstehenden Ansprüche, wobei die Zwischenschicht (8) eine Keramik, Titan, Molybdän oder eine Legierung aus Nickel und Kobalt umfasst, wobei die Keramik vorzugsweise Aluminiumoxid, Aluminiumnitrid, eine Niedertemperatur-Co-gebrannte Keramik (LTCC) oder Glas umfasst.

6. Vorrichtung (1) nach einem der vorstehenden Ansprüche, wobei die Zwischenschicht (8) eine Leiterplatte (PCB) (20) umfasst (21) oder ist.

7. Vorrichtung (1) nach einem der vorstehenden Ansprüche, wobei das mikrogefertigte Teil (3) ein Chip (27) für ein mikroelektromechanisches System (MEMS) ist.

8. Vorrichtung (1) nach Anspruch 7, wobei der MEMS-Chip (27) wenigstens eines von einem Sensor, einer Pumpe und einem Ventil umfasst.

9. Vorrichtung (1) nach Anspruch 8, wobei der MEMS-Chip(27)-Sensor wenigstens eines von, wie z.B. wenigstens zwei von, einem Durchflusssensor, einem Drucksensor, einer Viskositätsmessvorrichtung, einem Feuchtigkeitssensor, einem CO2-Sensor, einem Temperatursensor, einem Dielektrizitäts- oder Permittivitätssensor, einem Gaszusammensetzungssensor und einem Mehrparametersensor umfasst.

10. Vorrichtung (1) nach Anspruch 9, wobei der Durchflusssensor ein thermischer Durchflusssensor, ein deltaP-Sensor oder ein Coriolis-Durchflusssensor ist.

11. Vorrichtung (1) nach einem der vorstehenden Ansprüche, wobei die erste Hauptfläche (9) und/oder die zweite Hauptfläche (10) der Zwischenschicht (8) und/oder die Oberfläche (29) des Basisteils (2), die der Zwischenschicht zugewandt ist, und/oder die Oberfläche (16) des mikrogefertigten Teils (3), die der Zwischenschicht zugewandt ist, mit einem oder mehreren Vorsprüngen (31) zum Definieren der Dicke (t1, t2) der ersten (13) und/oder zweiten biegsamen Befestigungsschicht (14) versehen ist.

12. Vorrichtung (1) nach einem der vorstehenden Ansprüche, wobei die Zwischenschicht eine Steifigkeit etwa gleich dem mikrogefertigten Teil aufweist.

13. Vorrichtung (1) nach einem der vorstehenden Ansprüche, wobei die erste und die zweite biegsame Befestigungsschicht eine Streckgrenze über einer beliebigen Dehnung durch CTE-Unterschiede aufweisen.

14. Vorrichtung (1) nach einem der vorstehenden Ansprüche, wobei der Klebstoff, die Paste oder der Kleber sphärische Partikel mit einem vorgegebenen Durchmesser, wie z.B. Borsilicatpartikel, umfasst.

15. Verfahren zur Herstellung einer Vorrichtung (1) nach einem der vorstehenden Ansprüche, umfassend die Schritte:
A1. Befestigen des zweiten Befestigungsmittels (12) an der ersten Hauptfläche (16) des mikrogefertigten Teils (3) oder der zweiten Hauptfläche (10) der Zwischenschicht (8);
A2. Befestigen der Kombination von zweitem Befestigungsmittel (12) und mikrogefertigtem Teil (3) an der zweiten Hauptfläche (10) der Zwischenschicht (8) oder der Kombination von zweitem Befestigungsmittel (12) und Zwischenschicht (8) an dem mikrogefertigten Teil (3);
B1. Befestigen des ersten Befestigungsmittels (11) an der ersten Hauptfläche (9) der Zwischenschicht (8) oder der Oberfläche (29) des Basisteils (3);
B2. Befestigen der Kombination von erstem Befestigungsmittel (11) und Basisteil (2) an der ersten Hauptfläche (9) der Zwischenschicht (8) oder der Kombination von erstem Befestigungsmittel (11) und Zwischenschicht (8) an dem Basisteil (2).

16. Verfahren nach Anspruch 15, wobei die Schritte A1, A2, B1 und B2 in dieser Reihenfolge durchgeführt werden.

17. Verfahren nach Anspruch 15, wobei die Schritte A1 und A2 nach den Schritten B1 und B2 durchgeführt werden.

18. Verfahren nach einem der Ansprüche 15-17, wobei eine Thixotropie und/oder Viskosität des Klebers (15) ausreicht, um zu verhindern, dass der Kleber in den Einlassströmungskanal (4) und/oder Auslassströmungskanal (6) fließt.

## Revendications

1. Dispositif (1) de commande ou de mesure d'un fluide, comprenant :
- une partie de base (2) ;
- une partie microfabriquée (3) pour mesurer, commander ou réguler un fluide ;
- la partie de base (2) et la partie microfabriquée (3) étant séparées par une couche intermédiaire (8), présentant une première surface principale (9) et une seconde surface principale opposée (10), dans lequel la couche intermédiaire est fixée à la partie de base sur la première surface principale par l'intermédiaire d'un premier moyen de fixation (11) et fixée à la partie microfabriquée sur la seconde surface principale par l'intermédiaire d'un second moyen de fixation (12), dans lequel le premier moyen de fixation (11) et/ou le second moyen de fixation (12) comprennent une première (13) et/ou une seconde (14) couche de fixation souple,
- un canal d'écoulement d'entrée (4), situé dans la partie de base (2), s'étendant d'une entrée d'écoulement (34) dans la partie de base à travers une entrée d'écoulement (39) dans la couche intermédiaire (8) jusqu'à une entrée d'écoulement (5) de la partie microfabriquée ;
- un canal d'écoulement de sortie (6), situé dans la partie de base (2), s'étendant d'une sortie d'écoulement (7) de la partie microfabriquée à travers une sortie d'écoulement (40) dans la couche intermédiaire (8) jusqu'à une sortie d'écoulement (35) dans la partie de base, **caractérisé par**
- la partie de base (2) et la partie microfabriquée (3) étant réalisées en matériaux présentant des coefficients de dilatation thermique, CTE, différents, et par
- la couche intermédiaire (8) présentant un CTE compris entre un CTE de la partie de base (2) et un CTE de la partie microfabriquée (3).

2. Dispositif (1) selon la revendication 1, dans lequel la première (13) et/ou la seconde (14) couche de fixation souple comprend un adhésif, une pâte, une feuille, une gomme, un gel et/ou une colle de couche de fixation (15).

3. Dispositif (1) selon la revendication 1 ou 2, dans lequel la première (13) couche de fixation souple et/ou la seconde (14) couche de fixation souple comprennent un polymère thermodurcissable, comprenant de préférence une résine, telle qu'un époxy.

4. Dispositif (1) selon l'une quelconque des revendications précédentes, dans lequel la seconde surface principale (10) de la couche intermédiaire (8) est fixée à une première surface principale (16) de la partie microfabriquée (3), et la partie microfabriquée présente une seconde surface principale opposée (17), dans lequel la première surface principale de la partie microfabriquée est munie de connexions fluidiques (18) et est dépourvue de connexions électriques (19), tandis que la seconde surface principale de la partie microfabriquée est munie de connexions électriques (19) et est dépourvue de connexions fluidiques (18).

5. Dispositif (1) selon l'une quelconque des revendications précédentes, dans lequel la couche intermédiaire (8) comprend une céramique, du titane, du molybdène ou un alliage de nickel et de cobalt, dans lequel la céramique comprend de préférence de l'oxyde d'aluminium, du nitrure d'aluminium, une céramique cocuite à basse température, LTCC, ou du verre.

6. Dispositif (1) selon l'une quelconque des revendications précédentes, dans lequel la couche intermédiaire (8) comprend (21) ou est une carte de circuit imprimé (PCB) (20).

7. Dispositif (1) selon l'une quelconque des revendications précédentes, dans lequel la partie microfabriquée (3) est une puce de système microélectromécanique, MEMS, (27).

8. Dispositif (1) selon la revendication 7, dans lequel la puce MEMS (27) comprend au moins l'un parmi un capteur, une pompe ou une vanne.

9. Dispositif (1) selon la revendication 8, dans lequel le capteur de puce MEMS (27) comprend au moins l'un parmi, tel qu'au moins deux parmi, un débitmètre, un capteur de pression, un dispositif de mesure de viscosité, un capteur d'humidité, un capteur de CO2, un capteur de température, un capteur diélectrique ou de permittivité, un capteur de composition gazeuse ou un capteur multiparamètre.

10. Dispositif (1) selon la revendication 9, dans lequel le débitmètre est un débitmètre thermique, un capteur delta P ou un débitmètre de Coriolis.

11. Dispositif (1) selon l'une quelconque des revendications précédentes, dans lequel la première surface principale (9) et/ou la seconde surface principale (10) de la couche intermédiaire (8) et/ou la surface (29) de la partie de base (2) faisant face à la couche intermédiaire et/ou la surface (16) de la partie microfabriquée (3) faisant face à la couche intermédiaire est munie d'une ou de plusieurs saillies (31) permettant de définir l'épaisseur (t1, t2) de la première (13) et/ou la seconde (14) couche de fixation souple.

12. Dispositif (1) selon l'une quelconque des revendications précédentes, dans lequel la couche intermédiaire présente une rigidité approximativement égale à celle de la partie microfabriquée.

13. Dispositif (1) selon l'une quelconque des revendications précédentes, dans lequel les première et seconde couches de fixation souples présentent une limite d'élasticité supérieure à toute déformation due à des différences de CTE.

14. Dispositif (1) selon l'une quelconque des revendications précédentes, dans lequel l'adhésif, la pâte ou la colle comprend des particules sphériques présentant un diamètre prédéfini, telles que des particules de borosilicate.

15. Procédé de fabrication d'un dispositif (1) selon l'une quelconque des revendications précédentes, comprenant les étapes de :
A1. fixation du second moyen de fixation (12) à la première surface principale (16) de la partie microfabriquée (3) ou à la seconde surface principale (10) de la couche intermédiaire (8) ;
A2. fixation de l'ensemble du second moyen de fixation (12) et de la partie microfabriquée (3) à la seconde surface principale (10) de la couche intermédiaire (8) ou de l'ensemble du second moyen de fixation (12) et de la couche intermédiaire (8) à la partie microfabriquée (3) ;
B1. fixation du premier moyen de fixation (11) à la première surface principale (9) de la couche intermédiaire (8) ou à la surface (29) de la partie de base (2) ;
B2. fixation de l'ensemble du premier moyen de fixation (11) et de la partie de base (2) à la première surface principale (9) de la couche intermédiaire (8) ou de l'ensemble du premier moyen de fixation (11) et de la couche intermédiaire (8) à la partie de base (2).

16. Procédé selon la revendication 15, dans lequel les étapes A1, A2, B1 et B2 sont réalisées dans cet ordre.

17. Procédé selon la revendication 15, dans lequel les étapes A1 et A2 sont réalisées après les étapes B1 et B2.

18. Procédé selon l'une quelconque des revendications 15 à 17, dans lequel une thixotropie et/ou une viscosité de la colle (15) est suffisante pour empêcher la colle de s'écouler dans le canal d'écoulement d'entrée (4) et/ou le canal d'écoulement de sortie (6).
